# EUROPEAN PATENT APPLICATION

(11) **EP 1 221 697 A1**
(43) Date of publication of application: **10.07.2002**
(21) Application number: 00956972.4
(22) Date of filing: 06.09.2000
(51) Int. Cl.: G11B 17/04, G11B 33/02

(54) **INFORMATION PROCESSOR WITH DISK DEVICE, DISK DEVICE AND DISK TRAY**

(30) Priority: 06.09.1999 JP 25181699
(71) Applicant: Sony Computer Entertainment Inc., Tokyo 107-0052 (JP)
(72) Inventor: SHIDA, Yuji, Minato-ku, Tokyo 107-0052 (JP); MIYASAKA, Shigehisa, Minato-ku, Tokyo 107-0052 (JP)
(74) Representative: Turner, James Arthur
(86) International application number: JP0006061
(87) International publication number: WO0118805

(57) **Abstract**

An information processing system comprising a disk device is provided which is capable of placing a disk on a disk tray easily both when the system is set horizontally and when the system is set vertically. This system is provided with a disk device having a disk tray for placing a disk type recording medium therein, and a recording medium reproducing portion for drawing thereinto the disk tray on which said recording medium is mounted and reproducing said recording medium. The disk tray has a recess used to place the recording medium therein and having a circular outer circumference, and a reception member projecting from the outer circumference of the recess in the inward direction so as to retain an edge portion of the recording medium. The edge of the reception member extends curvilinearly along the outer circumference of the recess.

## Description

### TECHNICAL FIELD

This invention relates to an information processing system provided with a disk reproducing apparatus, and more particularly to an entertainment system provided with an optical disk reproducing apparatus.

### BACKGROUND ART

Known disk reproducing apparatuses, such as a CD-ROM include an apparatus of the type in which an upper cover covering a disk mounting portion is opened then placed a disk on this portion, and a loading type apparatus in which a disk tray is drawn out from an apparatus body toward a user then inserted a disk into a recess in an upper surface of the tray, which the disk-mounted tray as a whole is then put into the apparatus body. The loading type disk reproducing apparatuses include a so-called vertically settable apparatus capable of being used in an upright standing state so as to minimize a space for the installation thereof. However, when the apparatus is vertically set, a disk mounting surface of the disk tray also becomes vertical, so that the disk is liable to slip from the disk tray.

Japanese Patent Laid-Open No. 6-251479 discloses a disk unit in which parts of an outer circumferential portion of the disk are fitted loosely in pockets provided in several parts of an outer circumferential portions of a recess of a disk tray, so as to solve this problem. Aplate type member the main surface portion of which is rectangular is disclosed as a member showing a concrete shape of each pocket, and such plate type members are provided so as to project over several parts of the circumferential portion of the disk and hold the same. This publication also discloses a structure for holding a disk by engaging retractable hooks with an outer circumferential portion of the disk. Japanese Patent Laid-Open No. 7-326177 discloses a disk unit in which a disk is placed in a disk tray with a detachable cover then attached thereto so as to cover a part of the disk and thereby prevent the disk from slipping off.

In the disk unit disclosed in Japanese Patent Laid-Open No. 6-251479 and having pockets formed by projecting rectangular plate type members over an outer circumferential portion of a disk, it is necessary during the placing of the disk in a disk tray that the disk be slid into a clearance between the rectangular plate type members and disk tray. Therefore, even when a disk unit is set not vertically but horizontally, an operation for sliding the disk into such a clearance is required, so that a disk setting operation becomes complicated. Regarding the retractable hooks, it is necessary that the disk be mounted as the disk is positioned so that an edge of the disk engages the hooks. Accordingly, during the setting of a disk, a disk aligning operation has to be carried out consciously. The retractable hooks have to be provided with a structure for rendering the same retractable, so that the construction of the hooks is complicated.

The detachable cover disclosed in Japanese Patent Laid-Open No. 7-326177 is formed separately from the disk tray. Therefore, every time the disk is placed in or removed from the disk tray, cover attaching or detaching operation has to be carried out. This causes an operation for placing the disk in the disk tray to become very complicated.

### DISCLOSURE OF THE INVENTION

It is an object of the present invention to provide an information processing system having a disk device capable of placing a disk on a disk tray easily even when the disk unit is set horizontally or vertically.

In order to achieve the above-described object, an information processing system provided with a disk device according to the present invention is provided, having the following features.

That is, it is provided an information processing system comprising a disk device, wherein,
the disk device has a disk tray for placing a disk type recording medium therein, and a recording medium reproducing portion for drawing thereinto the disk tray on which recording medium is mounted and for reproducing the recording medium,
the disk tray includes a recess which has a circular outer circumference for placing the recording medium therein, and a reception member projecting from the outer circumference of the recess in the inward direction for retaining a circumferential edge portion of the recording medium, and
an edge portion of the reception member has a curvilinear shape along the outer circumference of the recess.

### BRIEF DESCRIPTION OF THE DRAWINGS

Preferred embodiments of the present invention will be described in detail on the basis of the following figures, wherein:
Fig. 1 is a front view showing an external appearance of an embodiment of an entertainment system 10 provided with an optical disk reproducing unit 1 according to the present invention;
Fig. 2 is a top view showing a shape of an operating unit 20 being connected to the entertainment system 10 of Fig. 1;
Fig. 3 is a block diagram showing the construction of the entertainment system of Fig. 1;
Fig. 4 is a perspective view showing an external appearance of the entertainment system 10 of Fig. 1 in a vertically set state;
Fig. 5 is a top view showing the construction of a disk tray 101 in the optical disk reproducing unit 1 of the entertainment system 10 of Fig. 1; and
Fig. 6 is a explanatory view showing the construction of the interior of a body 102 of the optical disk reproducing unit 1 of the entertainment system 10 of Fig. 1.

### BEST MODE FOR CARRYING OUT THE INVENTION

One embodiment of the entertainment system provided with an optical disk reproducing device according to the present invention will now be described.

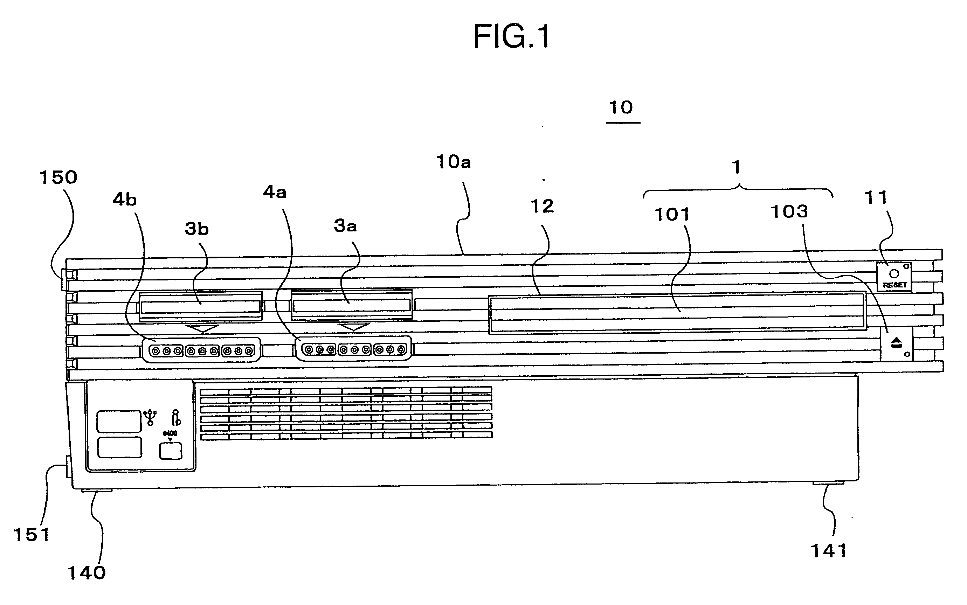

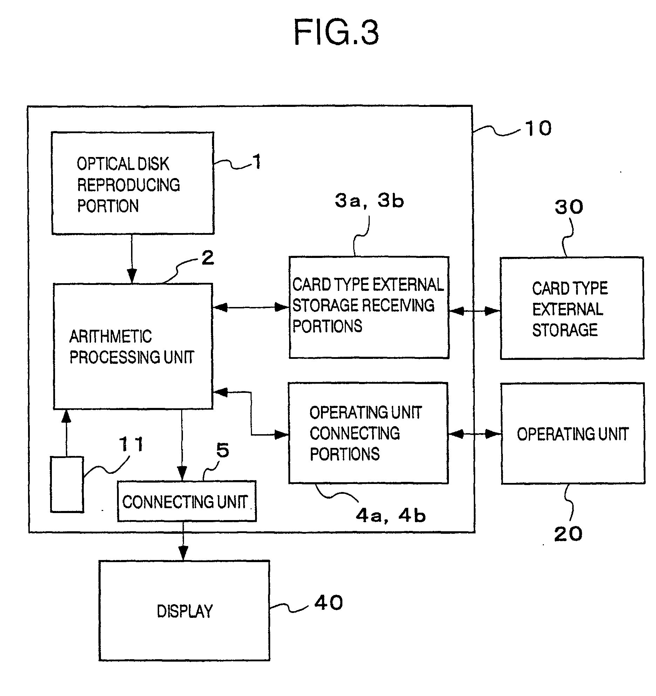

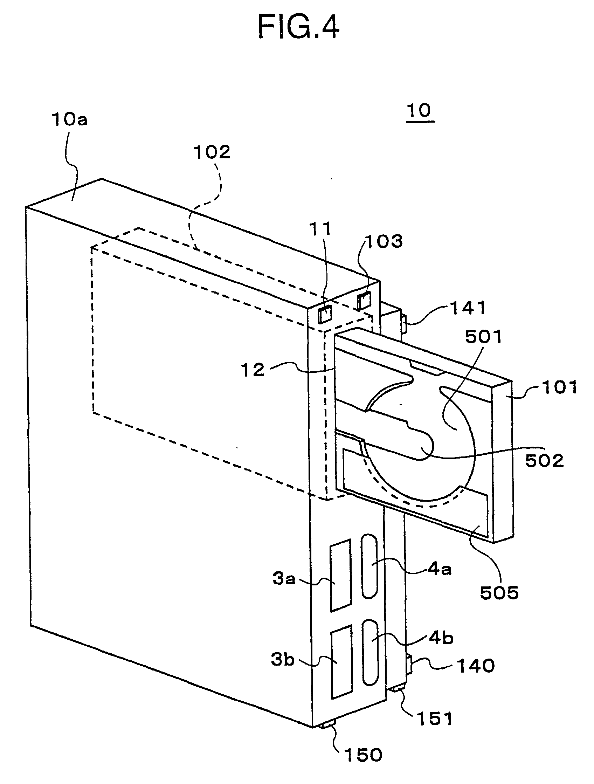

As shown in Figs. 1, 3 and 4, an entertainment system 10 of this embodiment has an optical disk reproducing portion 1, an arithmetic processing unit 2, card type external storage receiving portions 3a, 3b, operating unit connecting portions 4a, 4b, a switch 11, and a display connecting portion 5, etc. These portions and a unit accommodated in a housing 10a of such a shape as shown in Figs. 1 and 4. The housing 10a is provided on a bottom surface thereof with feet 140, 141 used when the entertainment system 10 is set in a horizontally elongated state, i.e., in a lying state as shown in Fig. 1, and on a side surface thereof with feet 150, 151 used when the entertainment system 10 is set in a vertically elongated state, i.e., in a standing state as shown in Fig. 4.

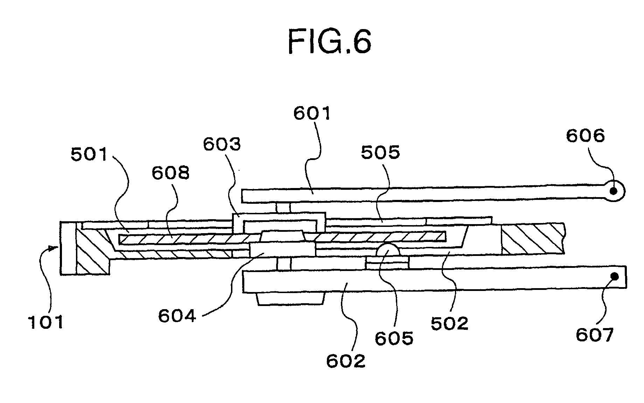

The optical disk reproducing portion 3 is a device for reproducing an optical disk 608 on which a game program and image information to be displayed are recorded in advance, and provided with a disk tray 101 for placing an optical disk 608 therein, a body 102 and a switch 103, etc. The disk tray 101 is arranged in a disk tray inserting opening 12 provided in a front surface of the housing 10a of the entertainment system 10. On the inner side of the opening 12, the body 102 of the optical disk reproducing unit 1 is provided. This body 102 is provided therein with a mechanism including a rack and a pinion, etc. for withdrawing the disk tray 101 from the opening 12 to the outside and retracting the disk tray 101 from the opening 12 into the interior of the housing 10a, and provided with a driving power source. The body 102 is also provided therein with an optical disk rotating mechanism, a reproducing head 605 and a reproducing circuit, etc. which are shown in Fig. 6. The optical disk rotating mechanism includes a disk clamper 603, a disk table 604, support frames 601, 602 for supporting the clamper 603 and table 604, and a driving power source (not shown), etc.

The switch 103 is a switch for giving instructions to draw out and retract the disk tray 101, this switch being provided on a front surface of the housing 10a. The switch 103 is connected to the driving power source, which is provided in the unit body 102, for the rack and pinion.

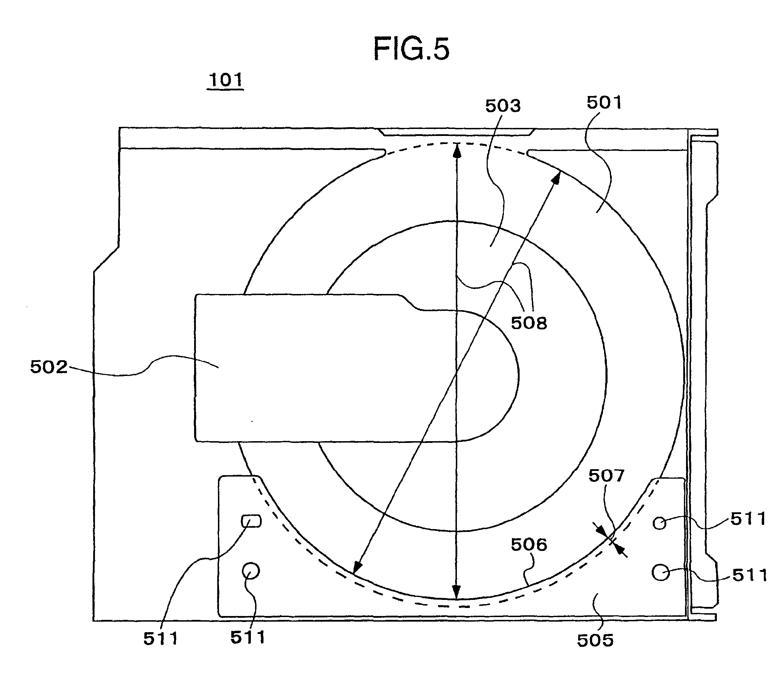

As shown in Figs. 5 and 6, the disk tray 101 is provided with a circular recess 501 in which an optical disk 608 is to be placed. The recess 501 is formed to a diameter slightly larger than that of the optical disk 608. A depth of a central portion 503 of the recess 501 is set larger.

The disk tray 101 has a reception member 505 fixed thereto as shown in Figs. 4 and 5, which reception member 505 receives and supports a lower edge of the optical disk 608 when the entertainment system 10 is set vertically, to prevent the optical disk 608 from coming off and falling from the recess 501. The reception member 505 is fixed by engaging four projections 511 with holes made in the disk tray 101.

The reception member 505 has a size large enough to cover about 1/3 of an outer circumference of the recess 501, and is formed so that an edge 506 of the same member 505 projects inward beyond the outer circumference of the recess 501 by a predetermined distance 507. Accordingly, the edge 506 is formed concentrically circles with the outer circumference of the recess 501.

A position in which the reception member 505 is fixed is on the lower side of the recess 501 of the disk tray 101 in the entertainment system 10 vertically set. The distance 507 of the reception member 505 is designed with consideration given to the length of the portion of the outer circumference of the recess 501 which the reception member 505 covers, in such a manner that the distance 507 by which the reception member 505 projects be large enough to prevent the optical disk 608 from slipping and falling. In this embodiment, the reception member 505 covers around 1/3 of the outer circumference of the recess as mentioned above. Therefore, even when the distance 507 by which the reception member 505 projects is several millimeters as shown in Fig. 5, the slipping and falling of the optical disk 608 can be prevented. Since the distance 507 by which the reception member 505 projects is thus small, diameters 508 of the portions of a bottom surface of the recess 501 of the disk tray 101 in this embodiment which are not covered with the reception member 505 can be securely set substantially equal to or slightly larger than that of the optical disk 608. Accordingly, during an operation for placing the disk 608 in the recess 501, the user does not have to be conscious of the reception member 505, i.e., the optical disk 608 may be placed on the portion of the bottom surface of the recess 501 which is not covered with the reception member 505. Consequently, when the entertainment system 10 is vertically set, the edge portion of the optical disk 608 slides by its own weight into a clearance between the reception member 505 and recess 501, so that the optical disk 608 is retained in a vertically extending state.

Since the edge 506 of the reception member 505 is circular, the reception member rarely gives flaws, etc. to the optical disk 608, etc. Further, in this embodiment, the reception member 505 is made of a material the softness of which is equal to or higher than that of the material out of which the optical disk 608 is formed, so that the reception member 505 more rarely gives flaws to the optical disk 608.

The depth of the recess 501 is set larger than the thickness of the optical disk 608. The positions in which the disk clamper 603 and disk table 604 hold the optical disk 608 are set so that the optical disk 608 is held in an intermediate portion with respect to the depth of the recess 501 as shown in Fig. 6. Accordingly, during the reproduction of the optical disk 608, the optical disk is rotated without contacting both the bottom surface of the recess 501 and the reception member 505.

The disk tray 101 is provided with an opening 502 formed by cutting out a bottom wall of the recess 501 in the radial direction thereof. When the disk tray 101 is drawn into the body 102 to reproduce the optical disk 608, the optical head 605 is inserted into the opening 502.

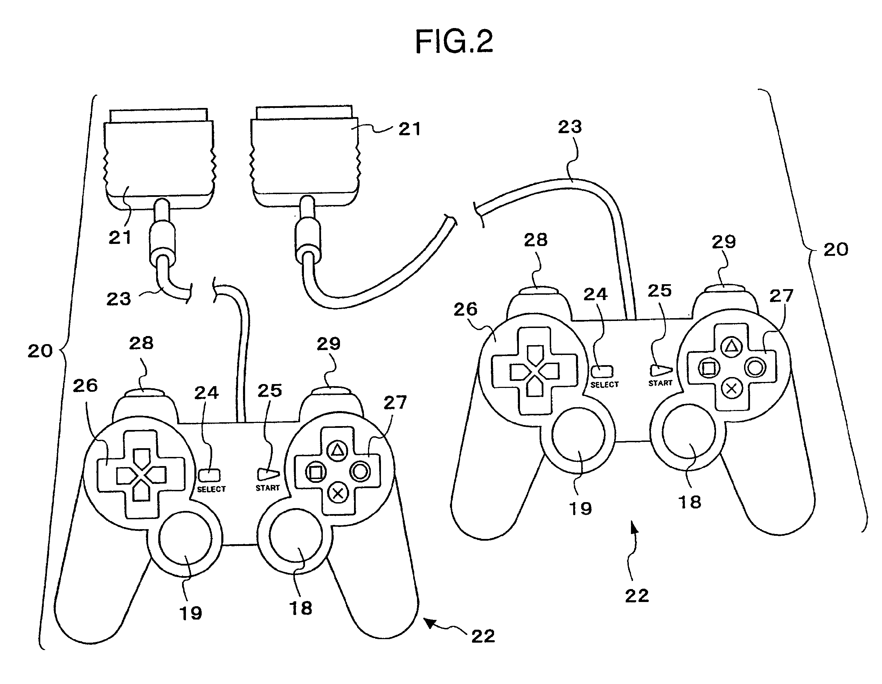

The front surface of the housing 10a of the entertainment system 10 is provided with card type external storage receiving portions 3a, 3b and operating unit connecting portions 4a, 4b arranged vertically respectively. The receiving portions 3a, 3b are capable of having card type external storages 30, in which the information on a game corresponding to each of operators, such as the progressing condition of a game is stored, connected thereto. The arithmetic processing unit 2 is capable of communicating with a connected external storage 30 to deliver the game information thereto and store the information in the same, and reading the game information stored in the external storage 30. Operating units 20 shown in Fig. 2 are connected to the operating unit connectingportions 4a, 4b. Each operating unit 20 includes a connector 21, operating member 22 and a cable 23. The operating member 22 is provided with various switches 18, 19, 24-29. The connectors 21 are inserted into the connecting portions 4a, 4b and connected thereto. Up to two operating units 20 can be connected to the entertainment system 10. One card type external storage can be connected to the entertainment system 10 corresponding to one operating unit 20.

The front surface of the housing 10a is provided with a reset button 11 for giving instructions to reset a game to the arithmetic processing unit 2. A rear surface of the housing 10a is provided with a connecting portion 5 for connecting an external display 40 thereto, a power switch (not shown), etc.

The procedure for operating and an action of each part of the entertainment system 10 of such a construction of this embodiment during a game played by the same system will now be described.

First, a user turns on the power switch, and then presses down the switch 103 on the front surface of the housing 10a to project the disk tray 101 from the housing 10a. The user then places the optical disk 608, on which a program, etc. of a game is recorded, in the recess 501 of the disk tray 101. During this time, the user may not substantially be conscious of the reception member 505. Both when the entertainment system 10 is set vertically, and when the entertainment system 10 is set horizontally, the user may move the optical disk 608 to the bottom surface of the recess 501 and separate his hand from the optical disk 608 with the optical disk 608 left lying along the bottom surface of the recess 501. When the entertainment system 10 is set vertically as shown in Fig. 4, the optical disk 608 slides down along the bottom surface of the recess 501 by its own weight, and the lower edge portion of the optical disk 608 slips into a clealance between the reception member 505 and the recess 501, the optical disk 608 being thereby retained by the reception member 505. Therefore, the optical disk 608 is retained in the disk tray 101 in a substantially vertically extending state without falling from the recess 501. In the case of the entertainment system 10 being set horizontally, when the user separates his hand from the optical disk 608, the optical disk 608 is placed as it is in the bottom surface of the recess 501.

When the user presses down the switch 103 again or presses the disk tray 101 to retract the disk tray 101 into the body 102, in the case of the entertainment system 10 being set vertically, the optical disk 608, disk tray 101 and all are loaded into the body 102 with the optical disk 608 kept substantially vertical by the reception member 505. When the entertainment system 10 is set horizontally in this case, the optical disk 608, disk tray 101 and all are loaded into the body 102 with the optical disk 608 left retained horizontally by the bottom surface of the recess 501.

With the retraction of the disk tray 101, support frames 601, 602 are turned around support shafts 606, 607 by an operation of a driving mechanism in the body 102, and the optical disk 608 is retained (Fig. 6) by the disk clamper 603 from the side of the upper surface thereof, and by the disk table 604 from the surface thereof which is on the side of the opening 502 of the disk tray 101. Even when the entertainment system 10 is set vertically in this case, the optical disk 608 is retained in a sandwiched state in a correct position without a fear of unexpectedly contacting the disk clamper 603, etc. since the optical disk 608 is held along the disk tray 101 by the reception member 505.

The disk clamper 603 and disk table 604 are adapted to turn the optical disk 608, while the optical head 605 is adapted to move from the opening 502 of the disk tray 101 and approach a rear surface of the rotating optical disk 608 to read the information recorded on the optical disk 608. During this time, the optical disk 608 is rotated without contacting the bottom surface of the recess 501 and reception member 505 since the position in which the optical disk 608 is held is in an intermediate portion of the recess 501 with respect to the direction of the depth thereof. The reproducing circuit in the body 102 is adapted to reproduce a game program, image information, etc. to be displayed from an output from the optical head 605, and deliver the reproduced information to the arithmetic unit 2.

The arithmetic processing unit 2 is adapted to form an image from the image information to be displayed which is received from the optical disk reproducing portion 1, and shows the image on the display 40 via the connecting portion 5. The arithmetic processing unit 2 is also adapted to receive via the connecting portions 4a, 4b an operation of the operating unit 20 carried out by the user, and execute the program in accordance with the operation, whereby a game forwarding image is re-formed and shown on the display 40 to vary the displayed image. The arithmetic processing unit 2 is further adapted to communicate with the card type external storages 30, which are connected to the receiving portions 3a, 3b, in accordance with the program to carry out the reading or storing of game information.

As has been described above, the optical disk reproducing unit 1 of the entertainment system 10 of this embodiment is provided with the reception member 505 having the arcuate edge 506 and fixed to the disk tray 101. Accordingly, even when the entertainment system 10 is set vertically or horizontally, the optical disk 608 can be retained vertically or horizontally in the disk tray 101 by a mere operation for placing the optical disk 608 along the edge 506. Therefore, unlike a related art entertainment system, the troublesome operations for sliding an edge portion of an optical disk into pockets, engaging an edge portion of an optical disk with hooks, and fixing a disk cover are unnecessary. This enables the optical disk 608 to be placed in the disk tray 101 simply both when the entertainment system 10 is set vertically and when the entertainment system 10 is set horizontally. Since the edge 506 of the reception member 505 is arcuate, there is not the possibility that the edge 506 gives flaws to the optical disk 608. Consequently, a user's operation for placing the optical disk 608 in the disk tray can be carried out more easily.

When disk edge holding plate type members for pockets or disk edge engageable hooks are used as in a related art entertainment system, these parts have to be provided in at least two positions. However, the reception member 505 of the optical disk reproducing unit 1 of this embodiment is one member, so that the fixing thereof becomes advantageously easy. Since the reception member 505 has an arcuate edge 506 and simple structure so that complicated structures, such as the hooks, and a detachable structure, such as the cover in the related art entertainment system are not required. Consequently, the reception member 505 can be manufactured at a low cost with ease.

Although the reception member 505 is fixed to the disk tray 101 by engaging four projections 511 with a disk tray 101 in the above-described embodiment, a method of fixing the reception member 505 is not limited to this method. It is possible to use, for example, a method of fixing the reception member 505 by screws instead of the projections 511, a method of fixing the reception member 505 by gluing the same to the disk tray 101 with glue material, and a fixing method using both screws and glue material. It is also possible to fix the reception member 505 to the disk tray 101 by fusing the contact surfaces thereof.

In the above-described embodiment, the diameters 508 of the portion of the bottom surface of the recess 501 of the disk tray 101 which is not covered with the reception member 505 are set equal to or slightly larger than that of the optical disk 608 so that the optical disk 608 can be placed on the portion of the mentioned bottom surface not covered with the reception member 505 but the present invention is not limited to this structure. The reasons reside in the following. Even when the diameters 508 of the portion of the bottom surface of the recess 501 which is not covered with the reception member 505 is smaller than that of the optical disk 608, the optical disk 608 can be placed easily in the bottom of the recess 501 along the edge 506 of the reception member 505 since the reception member 505 in this embodiment is arcuate. Owing to this structure, the edge of the optical disk 608 which is on the side of the reception member 505 reaches the bottom surface of the recess 501, and the edge on the opposite side of the optical disk 608 gets on an edge of the recess 501, so that the optical disk 608 inclines, whereby the edge of the optical disk 608 slides by its own weight into the reception member 505. Therefore, not only when the entertainment system is set vertically but also when the entertainment system is set horizontally, the edge of the optical disk 608 merely placed on the disk tray 101 slides into the reception member 505, in which the optical disk 608 can be retained. Accordingly, even when the diameters 508 of the portion of the bottom surface of the recess 501 which is not covered with the reception member 505 is smaller than the diameter of the optical disk 608, the optical disk 608 can be retained vertically or horizontally in the disk tray 101 by a simple action, i.e., by merely placing the optical disk 608 in the disk tray. In this case, it is also possible to form a side surface of the recess 501 incliningly so that the edge portion of the optical disk 608 slides more easily into the reception member 505.

According to the present invention described above, an information processing system having a disk device can be provided which is capable of placing a disk in a disk tray easily both when the system is set horizontally and when the system is set vertically.

### INDUSTRIAL APPLICABILITY

As described above, the information processing system according to the present invention is useful as an information processing system having a disk device capable of placing a disk in a disk tray easily both when the system is set horizontally and when the system is set vertically.

## Claims

1. An information processing system comprising a disk device, wherein:
said disk device has a disk tray for placing a disk type recording medium therein, and a recording medium reproducing portion for drawing thereinto said disk tray on which the recording medium mounted and for reproducing said recording medium:
said disk tray has a recess which has a circular outer circumference for placing said recording medium thereon, and a reception member projecting from the outer circumference of said recess in the inward direction for retaining a circumferential edge portion of said recording medium: and
an edge portion of said reception member has a curvilinear shape along said outer circumference of said recess.

2. An information processing system according to Claim 1, wherein said edge portion of the reception member has an arcuate shape concentric with a circular shape of said outer circumference of said recess.

3. An information processing system according to Claim 1, wherein a diameter of a portion of a bottom surface of said recess which is not covered with said reception member is equal to or larger than that of said recording medium.

4. An information processing system according to Claim 1, further comprising;
a housing in which the reproducing unit is provided, the housing being provided with a foot for laying the housing which are used to set the housing so that a main flat surface of said disk tray becomes horizontal, and a foot for standing the housing which are used to set the housing so that the main flat surface of the disk tray becomes vertical,
said reception member being provided to a portion of said disk tray which is positioned on a lower section of said disk tray when the housing is set by using said foot for standing the housing.

5. An information processing unit according to Claim 1, wherein said reception member covers not smaller than 1/3 of said outer circumference of said recess.

6. A disk device comprising:
a disk tray for placing a disk type recording medium therein, and a recording medium reproducing portion for drawing thereinto said disk tray on which the recording medium is mounted and reproducing said recording medium;
said disk tray including a recess which has a circular outer circumference for placing said recording medium therein, and a reception member projecting from the outer circumference of said recess in the inward direction for retaining a circumferential edge portion of said recording medium; and
an edge portion of said reception member having a curvilinear shape along said outer circumference of said recess.

7. A disk unit according to Claim 6, wherein said edge portion of the reception member has an arcuate shape concentric with a circular shape of said outer circumference of said recess .

8. A disk unit according to Claim 6, wherein a diameter of a portion of a bottom surface of said recess which is not covered with said reception member is equal to or larger than that of said recording medium.

9. A disk unit according to Claim 6 further comprising;
a housing in which the reproducing unit is provided, the housing being provided with a foot for laying the housing which are used to set the housing so that a main flat surface of said disk tray becomes horizontal, and a foot for standing the housing which are used to set the housing so that the main flat surface of the disk tray becomes vertical,
said reception member being provided to a portion of said disk tray which is positioned on a lower section of said disk tray when the housing is set by using said foot for standing the housing.

10. A disk unit according to Claim 6, wherein said reception member covers not smaller than 1/3 of said outer circumference of said recess.

11. A disk tray for placing a disk type recording medium therein, comprising:
a recess which has a circular outer circumference for placing said recording medium therein, and a reception member projecting from the outer circumference of said recess in the inward direction for retaining a circumferential edge portion of said recording medium; and
an edge portion of said reception member having a curvilinear shape along said outer circumference of said recess .

12. A disk tray according to Claim 11, wherein said edge portion of the reception member has an arcuate shape concentric with a circular shape of said outer circumference of said recess.

13. A disk tray according to Claim 11, wherein a diameter of a portion of a bottom surface of said recess which is not covered with said reception member is equal to or larger than that of said recording medium.

14. A disk tray according to Claim 11, wherein said reception member covers not smaller than 1/3 of said outer circumference of said recess.
